# EUROPEAN PATENT SPECIFICATION

(11) **EP 3 065 075 B1**
(45) Date of publication and mention of the grant of the patent: **29.08.2018**
(21) Application number: 16158361.2
(22) Date of filing: 03.03.2016
(51) Int. Cl.: G06F 21/44, G06F 21/73, H04L 9/32, G06F 12/14

(54) **TWO-STEP AUTHENTICATION AND ACTIVATION OF QUAD SMALL FORM FACTOR PLUGGABLE (QSFP+) TRANSCEIVERS**
ZWEISTUFIGE AUTHENTIFIZIERUNG UND AKTIVIERUNG VON QUAD-SMALL-FORM-FACTOR-PLUGGABLE (QSFP+)-TRANSCEIVERN
AUTHENTIFICATION EN DEUX ÉTAPES ET ACTIVATION D'ÉMETTEURS-RÉCEPTEURS SFP (ENFICHABLES COMPACTS) À PETIT FACTEUR DE FORME

(30) Priority: 04.03.2015 US 201514637568
(43) Date of publication of application: 07.09.2016
(73) Proprietor: Avaya Inc., Santa Clara, CA 95054-1233 (US)
(72) Inventor: LEE, Robert, Lexington, MA Massachusetts 02421 (US); HOMMA, Tamiji, Newbury Park, CA California 91320 (US); RAMACHANDRAN, Vikram, Andover, MA Massachusetts 01810 (US)
(74) Representative: Williams, David John

(56) References cited:
- CN-A- 1 996 350
- US-B1- 7 234 061
- US-B2- 8 762 714
- "SFF-8436: Specification for QSFP+ 10 Gbs 4X Pluggable Transceiver", , 31 October 2013 (2013-10-31), page 88, XP055267432, Retrieved from the Internet: URL:ftp://ftp.seagate.com/sff/SFF-8436.PDF [retrieved on 2016-04-21]

## Description

### BACKGROUND

The Quad Small Form-Factor Pluggable (QSFP or QSFP+) is a compact, hot-pluggable transceiver used for data communications applications. The terms QSFP and QSFP+ are used interchangeably herein. A QSFP+ interfaces networking hardware to a fiber optic cable. QSFP+ transceivers are an integral component in providing high bandwidth and long distance telecommunications and data communications solutions. Because two are used for every fiber connection between systems, it is a very high volume and highly competitive segment of the market. The use of the correct component for the right application is essential in delivering a solution that works correctly and consistently. Equipment manufacturers go through extensive testing to qualify parts and the correct applications that the parts should be used for.

US 7,234,061 discloses the provision of a magic key, vendor number, or a range of serial numbers to an authorized vendor by a circuit board manufacturer. "SFF-8436: Specification for QSFP+ 10 Gbs 4X Pluggable Transceiver", 31 October 2013, page 88, XP055267432 discloses the existence of host manufacturer and module manufacturer passwords.

CN 1996350 discloses a plug-in photo module electronic tag. An authentication process allows a counterfeit photo module identification.

### SUMMARY

The invention provides a computer-implemented method according to claim 1. The invention also provides a non-transitory computer readable storage medium according to claim 5. The invention further provides a computer system according to claim 10.

Conventional QSFP+ transceivers and systems that incorporate them suffer from a variety of deficiencies. One such deficiency is that, because of the margins involved there are manufacturers who have tried to sell non-qualified and often inferior parts. Until this point the identification of parts by the systems which use them has been non-systematic and easily subverted. Second market manufacturers will put labels with similar look of qualified parts and also encode the components with part numbers or portions of part numbers. The use of non-qualified parts does damage to the reputation of the applications and also leaves the consumer with higher costs when they have to debug the intermittent and flaky symptoms that accompany the use of non-qualified parts. They also in the end need to replace the non-working part.

Note that each of the different features, techniques, configurations, etc. discussed in this disclosure can be executed independently or in combination. Accordingly, the present invention can be embodied and viewed in many different ways. Also, note that this summary section herein does not specify every embodiment and/or incrementally novel aspect of the present disclosure or claimed invention. Instead, this summary only provides a preliminary discussion of different embodiments and corresponding points of novelty over conventional techniques. For additional details, elements, and/or possible perspectives (permutations) of the invention, the reader is directed to the Detailed Description section and corresponding figures of the present disclosure as further discussed below.

In a particular embodiment of a method for providing a two-step authentication and activation process for QSFP+ transceivers, the method begins with generating a first hashed password using a first encoding library, the first hashed password used for validating a component, the component having a memory, the memory having a protected part and an unprotected part. The method further includes generating a first hidden hash string using the first encoding library, the first hidden hash string used for validating the component. The method further includes using the first hashed password to program the first hashed password into a protected part of the component, and using the first hashed password to unlock the protected part of the component and write the first hidden hash string into the protected part of the component. Other embodiments include a computer readable medium having computer readable code thereon for providing a two-step authentication and activation process for QSFP+ transceivers. The computer readable medium includes instructions for generating a first hashed password using a first encoding library, the first hashed password used for validating a component, the component having a memory, the memory having a protected part and an unprotected part. The computer readable medium further includes instructions for generating a first hidden hash string using the first encoding library, the first hidden hash string used for validating the component. The computer readable medium further includes instructions for using the first hashed password to unlock the protected part of memory and to program the first hidden hash string into the protected part of the component.

Still other embodiments include a computerized device, configured to process all the method operations disclosed herein as embodiments of the invention. In such embodiments, the computerized device includes a memory system, a processor, communications interface in an interconnection mechanism connecting these components. The memory system is encoded with a process that provides a two-step authentication and activation process for QSFP+ transceivers, as explained herein that when performed (e.g. when executing) on the processor, operates as explained herein within the computerized device to perform all of the method embodiments and operations explained herein as embodiments of the invention. Thus any computerized device that performs or is programmed to perform the processing explained herein is an embodiment of the invention.

Other arrangements of embodiments of the invention that are disclosed herein include software programs to perform the method embodiment steps and operations summarized above and disclosed in detail below. More particularly, a computer program product is one embodiment that has a computer-readable medium including computer program logic encoded thereon that when performed in a computerized device provides associated operations providing a two-step authentication and activation process for QSFP+ transceivers as explained herein. The computer program logic, when executed on at least one processor with a computing system, causes the processor to perform the operations (e.g., the methods) indicated herein as embodiments of the invention. Such arrangements of the invention are typically provided as software, code and/or other data structures arranged or encoded on a computer readable medium such as an optical medium (e.g., CD-ROM), floppy or hard disk or other a medium such as firmware or microcode in one or more ROM or RAM or PROM chips or as an Application Specific Integrated Circuit (ASIC) or as downloadable software images in one or more modules, shared libraries, etc. The software or firmware or other such configurations can be installed onto a computerized device to cause one or more processors in the computerized device to perform the techniques explained herein as embodiments of the invention. Software processes that operate in a collection of computerized devices, such as in a group of data communications devices or other entities can also provide the system of the invention. The system of the invention can be distributed between many software processes on several data communications devices, or all processes could run on a small set of dedicated computers or on one computer alone.

It is to be understood that the embodiments of the invention can be embodied strictly as a software program, as software and hardware, or as hardware and/or circuitry alone, such as within a data communications device. The features of the invention, as explained herein, may be employed in data communications devices and/or software systems for such devices such as those manufactured by Avaya, Inc. of Basking Ridge, New Jersey.

Note that each of the different features, techniques, configurations, etc. discussed in this disclosure can be executed independently or in combination. Accordingly, the present invention can be embodied and viewed in many different ways. Also, note that this summary section herein does not specify every embodiment and/or incrementally novel aspect of the present disclosure or claimed invention. Instead, this summary only provides a preliminary discussion of different embodiments and corresponding points of novelty over conventional techniques. For additional details, elements, and/or possible perspectives (permutations) of the invention, the reader is directed to the Detailed Description section and corresponding figures of the present disclosure as further discussed below.

### BRIEF DESCRIPTION OF THE DRAWINGS

The foregoing will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention. The drawings are not necessarily to scale, emphasis instead being placed upon illustrating the principles of the invention.
Figure 1 depicts a block diagram of a QSFP+ transceiver in accordance with a particular embodiment of the present invention.
Figure 2 depicts a flow diagram of a particular embodiment of a method for providing a two-step authentication and activation process for QSFP+ transceivers in accordance with a particular embodiment of the present invention.
Figure 3 depicts a block diagram of a system for providing a two-step authentication and activation process for QSFP+ transceiver in accordance with a particular embodiment of the present invention.

### DETAILED DESCRIPTION

The embodiments set forth below represent the necessary information to enable those skilled in the art to practice the invention and illustrate the best mode of practicing embodiments of the invention. Upon reading the following description in light of the accompanying figures, those skilled in the art will understand the concepts of the invention and recognize applications of these concepts not particularly addressed herein. It should be understood that these concepts and applications fall within the scope of the disclosure and the accompanying claims.

The preferred embodiment of the invention will now be described with reference to the accompanying drawings. The invention may, however, be embodied in many different forms and should not be construed as limited to the embodiment set forth herein; rather, this embodiment is provided so that this disclosure will be thorough and complete, and will fully convey the scope of the invention to those skilled in the art. The terminology used in the detailed description of the particular embodiment illustrated in the accompanying drawings is not intended to be limiting of the invention. In the drawings, like numbers refer to like elements. The present invention utilizes a two-step process to validate that a QSFP is a qualified component and limit its operation only to qualified components.

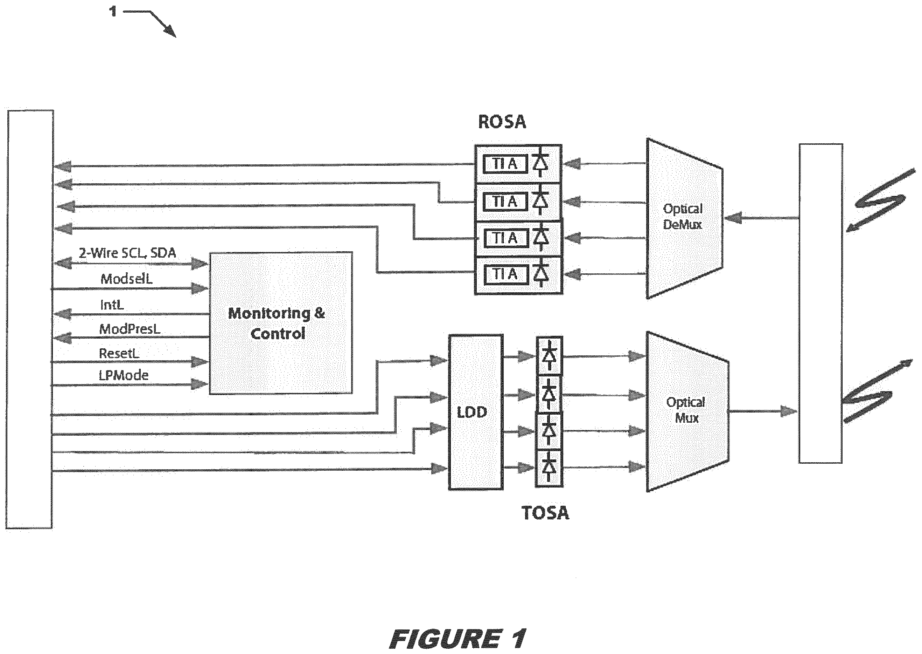

A high level block diagram of a QSFP+ transceiver 1 is shown in Figure 1. The QSFP+ is a compact, hot-pluggable transceiver used for data communications applications. It interfaces networking hardware to a fiber optic cable. The QSFP specification accommodates different data rate options. QSFP+ transceivers are designed to carry Serial Attached Small Computer Serial Interface (SCSI), 40G Ethernet, Quad Data Rate (QDR) (40G) and Fourteen Data Rate (FDR) (56G) Infiniband, and other communications standards.

A problem addressed by the presently described method and apparatus for providing a two-step authentication and activation process for QSFP+ transceivers is being able to have valid certified QSFP+ components in a system. Parts are manufactured according to specifications. Part of the specification details the memory within the device and what parts of that memory are readable. The QSFP+ device has the ability to lock and unlock areas of memory. The physical memory has a readable part of memory and also has a locked piece of memory which is only accessible by using the valid matching password calculated by the encoding library with the readable memory contents as input. A system manufacturer provides software (also referred to herein as an encoding library) which reads from the unprotected memory and uses a hash to generate a password which is the key to the locked portion of memory of the device to allow access to locked memory. Another hash is performed on the readable data to generate another field (the hidden hash string) that is stored in the locked memory area. Once both the unlocking and the check that the generated hash string matches the data in the locked memory, the device is useable.

The software provided to the vendor is used to acquire a number of bytes from the readable area and generate two strings. One string (a hashed password) is used to program the key to the locked memory and then used to unlock the memory. The other string (a hidden hash string) is then written into the locked area. This is done during the manufacturing process. Due to the fields used to generate the strings (e.g. a serial number or some other number that is unique for each part) the strings will be unique for each part.

When a system receives the device, it will read and validate the memory fields by generating the exact same strings (referred to herein as a second hashed password which should match the first hashed password and a second hidden hash string which should match the first hidden hash string). The system will use the first string to unlock the device memory and verify the stored hidden hash string matches the second string.

This prevents others from just copying the readable memory and printing the information into every part. In the past the necessary security against nefarious parts manufacturers could be easily overcome. By way of the presently described invention, an additional set of security checks is provided By way of reading different fields for each of the two passwords, and using two different hash keys, it becomes much more difficult to unlock memory and use the device.

If someone is somehow able to copy the part exactly, the code detects that there is a more than one part with the same information and does not allow any additional devices to be enabled beyond the first one.

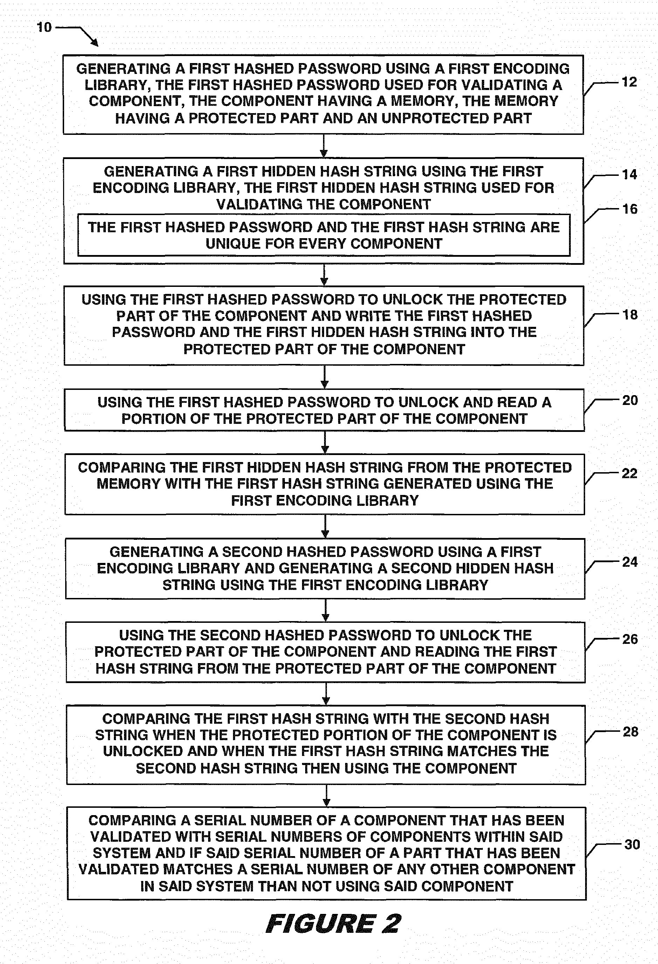

A flow chart of a particular embodiment of the presently disclosed method 10 is depicted in Figure 2. The rectangular elements are herein denoted "processing blocks" and represent computer software instructions or groups of instructions. Alternatively, the processing blocks represent steps performed by functionally equivalent circuits such as a digital signal processor circuit or an application specific integrated circuit (ASIC). The flow diagrams do not depict the syntax of any particular programming language. Rather, the flow diagrams illustrate the functional information one of ordinary skill in the art requires to fabricate circuits or to generate computer software to perform the processing required in accordance with the present invention. It should be noted that many routine program elements, such as initialization of loops and variables and the use of temporary variables are not shown. It will be appreciated by those of ordinary skill in the art that unless otherwise indicated herein, the particular sequence of steps described is illustrative only and can be varied without departing from the spirit of the invention. Thus, unless otherwise stated the steps described below are unordered meaning that, when possible, the steps can be performed in any convenient or desirable order.

Referring now to Figure 2, the method 10 begins with processing block 12 which discloses generating a first hashed password using a first encoding library, the first hashed password used for validating a component, the component having a memory, the memory having a protected part and an unprotected part. Processing block 14 states generating a first hidden hash string using the first encoding library, the first hidden hash string used for validating the component. Processing block 16 recites the first hashed password and the first hash string are unique for every component. The encoding library uses existing fields in the components memory, at least one of which is unique for each device, such as a serial number or the like.

Processing block 18 discloses using the first hashed password to unlock the protected part of the component and write the first hashed string into the protected part of the component. Processing block 20 states using the first hashed password to unlock the protected part of the component and write the first hidden hash string into the protected part of the component. The component now has two unique pieces of data in the locked part of memory, which will be used later to verify the component.

Processing continues with processing block 20 which describes the steps for validating the component. As shown in processing block 20 the validating includes generating the first hashed password to unlock and read a portion of the protected part of the component. As further shown in processing block 22 the validating also includes comparing the first hidden hash string from the protected memory with the first hash string generated using the first encoding library.

Processing continues at the point where the component is integrated into a system at a system provider. Processing block 24 states generating a second hashed password using a first encoding library and generating a second hidden hash string using the first encoding library.

Processing block 26 recites using the second hashed password to unlock the protected part of the component and reading the first hash string from the protected part of the component.

Processing block 28 discloses comprising comparing the first hash string with the second hash string when the protected portion of the component is unlocked and when the first hash string matches the second hash string then using the component.

Processing block 30 states comparing a serial number of a component that has been validated with serial numbers of components within said system and if said serial number of a part that has been validated matches a serial number of any other component in said system then not using said component.

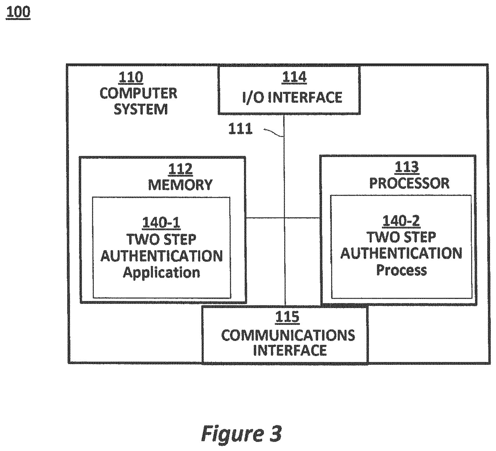

Figure 3 is a block diagram illustrating example architecture of a computer system 110 that executes, runs, interprets, operates or otherwise performs a two-step authentication operating application 140-1 and two-step authentication operating process 140-2 suitable for use in explaining example configurations disclosed herein. The computer system 110 may be any type of computerized device such as a personal computer, workstation, portable computing device, console, laptop, network terminal or the like. An input device 116 (e.g., one or more customer/developer controlled devices such as a keyboard, mouse, etc. - not shown) couples to a processor 113 through an input/output (I/O) interface 114, and enables a customer to provide input commands, and generally control a graphical customer interface (not shown) that the two-step authentication operating application 140-1 and process 140-2 provides on a display (not shown). As shown in this example, the computer system 110 includes an interconnection mechanism 111 such as a data bus or other circuitry that couples a memory system 112, the processor 113, the I/O interface 114, and a communications interface 115. The communications interface 115 enables the computer system 110 to communicate with other devices (i.e., other computers) on a network (not shown).

The memory system 112 is any type of computer readable medium, and in this example, is encoded with a two-step authentication operating application 140-1 as explained herein. The two-step authentication operating application 140-1 may be embodied as software code such as data and/or logic instructions (e.g., code stored in the memory or on another computer readable medium such as a removable disk) that supports processing functionality according to different embodiments described herein. During operation of the computer system 110, the processor 113 accesses the memory system 112 via the interconnect 111 in order to launch, run, execute, interpret or otherwise perform the logic instructions of a two-step authentication operating application 140-1. Execution of a two-step authentication operating application 140-1 in this manner produces processing functionality in the two-step authentication operating process 140-2. In other words, the two-step authentication operating process 140-2 represents one or more portions or runtime instances of a two-step authentication operating application 140-1 (or the entire a two-step authentication operating application 140-1) performing or executing within or upon the processor 113 in the computerized device 110 at runtime.

It is noted that example configurations disclosed herein include the two-step authentication operating application 140-1 itself (i.e., in the form of un-executed or non-performing logic instructions and/or data). The two-step authentication operating application 140-1 may be stored on a computer readable medium (such as a floppy disk), hard disk, electronic, magnetic, optical, or other computer readable medium. A two-step authentication operating application 140-1 may also be stored in a memory system 112 such as in firmware, read only memory (ROM), or, as in this example, as executable code in, for example, Random Access Memory (RAM). In addition to these embodiments, it should also be noted that other embodiments herein include the execution of a two-step authentication operating application 140-1 in the processor 113 as the two-step authentication operating process 140-2. Those skilled in the art will understand that the computer system 110 may include other processes and/or software and hardware components, such as an operating system not shown in this example.

The display 130 need not be coupled directly to computer system 110. For example, the two-step authentication operating application 140-1 can be executed on a remotely accessible computerized device via the communications interface 115. In this instance, the graphical customer interface 160 may be displayed locally to a customer 108 of the remote computer, and execution of the processing herein may be client-server based.

During operation, processor 113 of computer system 100 accesses memory system 112 via the interconnect 111 in order to launch, run, execute, interpret or otherwise perform the logic instructions of the two-step authentication operating application 140-1. Execution of two-step authentication operating application 140-1 produces processing functionality in two-step authentication operating process 140-2. In other words, the two-step authentication operating process 140-2 represents one or more portions of the two-step authentication operating application 140-1 (or the entire application) performing within or upon the processor 113 in the computer system 100.

It should be noted that, in addition to the two-step authentication operating process 140-2, embodiments herein include the two-step authentication operating application 140-1 itself (i.e., the un-executed or non-performing logic instructions and/or data). The two-step authentication operating application 140-1 can be stored on a computer readable medium such as a floppy disk, hard disk, or optical medium. The two-step authentication operating application 140-1 can also be stored in a memory type system such as in firmware, read only memory (ROM), or, as in this example, as executable code within the memory system 112 (e.g., within Random Access Memory or RAM).

In addition to these embodiments, it should also be noted that other embodiments herein include the execution of two-step authentication operating application 140-1 in processor 113 as the two-step authentication operating process 140-2. Those skilled in the art will understand that the computer system 100 can include other processes and/or software and hardware components, such as an operating system that controls allocation and use of hardware resources associated with the computer system 100.

The device(s) or computer systems that integrate with the processor(s) may include, for example, a personal computer(s), workstation(s) (e.g., Sun, HP), personal digital assistant(s) (PDA(s)), handheld device(s) such as cellular telephone(s), laptop(s), handheld computer(s), or another device(s) capable of being integrated with a processor(s) that may operate as provided herein. Accordingly, the devices provided herein are not exhaustive and are provided for illustration and not limitation.

References to "a microprocessor" and "a processor", or "the microprocessor" and "the processor," may be understood to include one or more microprocessors that may communicate in a stand-alone and/or a distributed environment(s), and may thus be configured to communicate via wired or wireless communications with other processors, where such one or more processor may be configured to operate on one or more processor-controlled devices that may be similar or different devices. Use of such "microprocessor" or "processor" terminology may thus also be understood to include a central processing unit, an arithmetic logic unit, an application-specific integrated circuit (IC), and/or a task engine, with such examples provided for illustration and not limitation.

Furthermore, references to memory, unless otherwise specified, may include one or more processor-readable and accessible memory elements and/or components that may be internal to the processor-controlled device, external to the processor-controlled device, and/or may be accessed via a wired or wireless network using a variety of communications protocols, and unless otherwise specified, may be arranged to include a combination of external and internal memory devices, where such memory may be contiguous and/or partitioned based on the application. Accordingly, references to a database may be understood to include one or more memory associations, where such references may include commercially available database products (e.g., SQL, Informix, Oracle) and also proprietary databases, and may also include other structures for associating memory such as links, queues, graphs, trees, with such structures provided for illustration and not limitation. References to a network, unless provided otherwise, may include one or more intranets and/or the internet, as well as a virtual network. References herein to microprocessor instructions or microprocessor-executable instructions, in accordance with the above, may be understood to include programmable hardware.

Unless otherwise stated, use of the word "substantially" may be construed to include a precise relationship, condition, arrangement, orientation, and/or other characteristic, and deviations thereof as understood by one of ordinary skill in the art, to the extent that such deviations do not materially affect the disclosed methods and systems.

Throughout the entirety of the present disclosure, use of the articles "a" or "an" to modify a noun may be understood to be used for convenience and to include one, or more than one of the modified noun, unless otherwise specifically stated.

Elements, components, modules, and/or parts thereof that are described and/or otherwise portrayed through the figures to communicate with, be associated with, and/or be based on, something else, may be understood to so communicate, be associated with, and or be based on in a direct and/or indirect manner, unless otherwise stipulated herein.

Although the methods and systems have been described relative to a specific embodiment thereof, they are not so limited. Obviously many modifications and variations may become apparent in light of the above teachings. Many additional changes in the details, materials, and arrangement of parts, herein described and illustrated, may be made by those skilled in the art.

Having described preferred embodiments of the invention it will now become apparent to those of ordinary skill in the art that other embodiments incorporating these concepts may be used. Additionally, the software included as part of the invention may be embodied in a computer program product that includes a computer useable medium. For example, such a computer usable medium can include a readable memory device, such as a hard drive device, a CD-ROM, a DVD-ROM, or a computer diskette, having computer readable program code segments stored thereon. The computer readable medium can also include a communications link, either optical, wired, or wireless, having program
code segments carried thereon as digital or analog signals.

## Claims

1. A computer-implemented method for providing two-step authentication and activation of Quad Small Form Factor Pluggable, QSFP+, transceivers, comprising:
generating, by a first processor, a first hashed password and a first hidden hash string that are used for validating a component, said component having a memory comprising a protected part and an unprotected part (12, 14), wherein said first hashed password and said first hidden hash string are each generated by software comprising a first encoding library using different fields of readable data from said unprotected part of said memory;
unlocking, by said first processor, using said first hashed password, said protected part of said memory (18);
writing, by said first processor, said first hashed password into said protected part of said memory (18); and
writing, by said first processor, said first hidden hash string into said protected part of said memory (18).

2. The method of claim 1, further comprising validating, by said first processor, said component, said validating comprising:
unlocking, using said first hashed password, said protected part of said memory (20);
reading a portion of said protected part of said memory (20); and
comparing said portion from said protected part of said memory with said first hidden hash string generated using said software comprising said first encoding library (22).

3. The method of claim 1, wherein said first hashed password and said first hidden hash string are unique for every component (16).

4. The method of claim 1, further comprising, at a system provider:
generating, by a second processor, a second hashed password using said first encoding library (24), said second hashed password matching said first hashed password; and
generating, by said second processor, a second hidden hash string using said first encoding library (24), said second hidden hash string matching said first hidden hash string.

5. A non-transitory computer readable storage medium having computer readable code thereon for two-step authentication and activation of Quad Small Form Factor Pluggable, QSFP+, transceivers, said medium including instructions in which a computer system performs operations comprising:
generating a first hashed password and a first hidden hash string that are used for validating a component, said component having a memory comprising a protected part and an unprotected part (12, 14), wherein said first hashed password and said first hidden hash string are each generated by software comprising a first encoding library using different fields of readable data from said unprotected part of said memory;
unlocking, using said first hashed password, said protected part of said memory (18);
writing said first hashed password into said protected part of said memory (18); and
writing said first hidden hash string into said protected part of said memory (18).

6. The computer readable storage medium of claim 5, further comprising instructions in which said computer system performs operations further comprising validating said component, said validating comprising:
unlocking, using said first hashed password, said protected part of said memory (20);
reading a portion of said protected part of said memory (20); and
comparing said portion from said protected part of said memory with said first hidden hash string generated using said software comprising said first encoding library (22).

7. The computer readable storage medium of claim 5, wherein said first hashed password and said first hidden hash string are unique for every component (16).

8. The computer readable storage medium of claim 5, further comprising, at a system provider:
generating a second hashed password using said first encoding library, said second hashed password matching said first hashed password (24); and
generating a second hidden hash string using said first encoding library, said second hidden hash string matching said first hidden hash string (24).

9. The computer readable storage medium of claim 8, further comprising:
unlocking, using said second hashed password, said protected part of said memory (26); and
reading said first hidden hash string from said protected part of said memory (26).

10. A computer system (100) including a computer, said computer comprising:
a memory (112);
a processor (113);
a communications interface (115); and
an interconnection mechanism (111) coupling said memory, said processor, and said communications interface; and
wherein said memory is encoded with an application (140-1) providing two-step authentication and activation of Quad Small Form Factor Pluggable, QSFP+, transceivers (1), that when performed on said processor, provides a process (140-2) for processing information, said process causing said computer system to perform the operations of:
generating a first hashed password and a first hidden hash string that are used for validating a component, said component having a memory comprising a protected part and an unprotected part (12, 14), wherein said first hashed password and said first hidden hash string are each generated by software comprising a first encoding library using different fields of readable data from said unprotected part of said memory;
unlocking, using said first hashed password, said protected part of said memory (18);
writing said first hashed password into said protected part of said memory (18); and
writing said first hidden hash string into said protected part of said memory (18).

11. The computer system of claim 10, wherein said process causes said computer system to perform the further operation of validating said component, said validating comprising:
unlocking, using said first hashed password, said protected part of said memory (20);
reading a portion of said protected part of said memory (20); and
comparing said portion from said protected part of said memory with said first hidden hash string generated using said software comprising said first encoding library (22).

12. The computer system of claim 10, further comprising a second computer at a system provider, said second computer comprising:
a second memory;
a second processor;
a second communications interface; and
a second interconnection mechanism coupling said second memory, processor, and communications interface; and
wherein said memory is encoded with an application providing two-step authentication and activation of Quad Small Form Factor Pluggable (QSFP+) transceivers, that when performed on said processor, provides a second process for processing information, said second process causing said second computer system to perform the operations of:
generating a second hashed password using said first encoding library (24), said second hashed password matching said first hashed password; and
generating a second hidden hash string using said first encoding library (24), said second hidden hash string matching said first hidden hash string.

13. The computer system of claim 12, wherein said second process causes said second computer system to perform the further operations of:
unlocking, using said second hashed password, said protected part of said memory (26); and
reading said first hidden hash string from said protected part of said memory (26).

14. The computer system of claim 13, wherein said second process causes said second computer system to perform the further operations of:
comparing said first hidden hash string with said second hidden hash string, and when said protected portion of said memory is unlocked and when said first hidden hash string matches said second hidden hash string, then validating said component (28); and
comparing a serial number of said component that has been validated with serial numbers of one or more additional components within said computer system, and when said serial number of said component that has been validated matches a serial number of any of said one or more additional components within said computer system, then not using said component (30).

## Patentansprüche

1. Computerimplementiertes Verfahren zum Bereitstellen von zweistufiger Authentisierung und Aktivierung von QSFP+ (Quad Small Form Factor Pluggable) Transceivern, das Folgendes beinhaltet:
Erzeugen, durch einen ersten Prozessor, eines ersten gehashten Passworts und eines ersten verborgenen Hash-Strings, die zum Validieren einer Komponente benutzt werden, wobei die genannte Komponente einen Speicher hat, der einen geschützten Teil und einen ungeschützten Teil (12, 14) umfasst, wobei das genannte erste gehashte Passwort und der genannte erste verborgene Hash-String jeweils durch Software erzeugt werden, die eine erste Codierbibliothek mit unterschiedlichen Feldern von lesbaren Daten aus dem genannten ungeschützten Teil des genannten Speichers umfasst;
Entsperren, durch den genannten ersten Prozessor, anhand des genannten ersten gehashten Passworts, des genannten geschützten Teils des genannten Speichers (18);
Schreiben, durch den genannten ersten Prozessor, des genannten ersten gehashten Passworts in den genannten geschützten Teil des genannten Speichers (18);
Schreiben, durch den genannten ersten Prozessor, des genannten ersten verborgenen Hash-Strings in den genannten geschützten Teil des Speichers (18).

2. Verfahren nach Anspruch 1, das ferner das Validieren, durch den genannten ersten Prozessor, der genannten Komponente beinhaltet, wobei das genannte Validieren Folgendes beinhaltet:
Entsperren, anhand des genannten ersten gehashten Passworts, des genannten geschützten Teils des genannten Speichers (20) ;
Lesen eines Abschnitts des genannten geschützten Teils des genannten Speichers (20); und
Vergleichen des genannten Abschnitts aus dem genannten geschützten Teil des genannten Speichers mit dem genannten verborgenen Hash-String, der mit der genannten, die genannte Codierbibliothek (22) umfassenden Software erzeugt wurde.

3. Verfahren nach Anspruch 1, wobei das genannte erste gehashte Passwort und der genannte erste verborgene Hash-String für jede Komponente (16) einmalig sind.

4. Verfahren nach Anspruch 1, das ferner an einem Systemanbieter Folgendes beinhaltet:
Erzeugen, durch einen zweiten Prozessor, eines zweiten gehashten Passworts anhand der genannten ersten Codierbibliothek (24), wobei das genannte zweite gehashte Passwort mit dem genannten ersten gehashten Passwort übereinstimmt; und
Erzeugen, durch den genannten zweiten Prozessor, eines zweiten verborgenen Hash-Strings anhand der genannten ersten Codierbibliothek (24), wobei der genannte zweite verborgene Hash-String mit dem genannten ersten verborgenen Hash-String übereinstimmt.

5. Nichtflüchtiges computerlesbares Speichermedium, auf dem sich computerlesbarer Code für eine zweistufige Authentisierung und Aktivierung von QSFP+ (Quad Small Form Factor Pluggable) Transceivern befindet, wobei das genannte Medium Befehle beinhaltet, in denen ein Computersystem Vorgänge durchführt, die Folgende umfassen:
Erzeugen eines ersten gehashten Passworts und eines ersten verborgenen Hash-Strings, die zum Validieren einer Komponente benutzt werden, wobei die genannte Komponente einen Speicher hat, der einen geschützten Teil und einen ungeschützten Teil (12, 14) umfasst, wobei das genannte erste gehashte Passwort und der genannte erste verborgene Hash-String jeweils durch Software erzeugt werden, die eine erste Codierbibliothek mit unterschiedlichen Feldern von lesbaren Daten aus dem genannten ungeschützten Teil des genannten Speichers umfasst;
Entsperren, mit dem genannten ersten gehashten Passwort, des genannten geschützten Teils des genannten Speichers (18);
Schreiben des genannten ersten gehashten Passworts in den genannten geschützten Teil des genannten Speichers (18); und
Schreiben des genannten ersten verborgenen Hash-Strings in den genannten geschützten Teil des genannten Speichers (18).

6. Computerlesbares Speichermedium nach Anspruch 5, das ferner Befehle umfasst, in denen das genannte Computersystem Operationen durchführt, die ferner das Validieren der genannten Komponente umfassen, wobei das genannte Validieren Folgendes beinhaltet:
Entsperren, anhand des genannten ersten gehashten Passworts, des genannten geschützten Teils des genannten Speichers (20) ;
Lesen eines Abschnitts des genannten geschützten Teils des genannten Speichers (20); und
Vergleichen des genannten Abschnitts aus dem genannten geschützten Teil des genannten Speichers mit dem genannten ersten verborgenen Hash-String, der mit der genannten, die genannte Codierbibliothek (22) umfassenden Software erzeugt wurde.

7. Computerlesbares Speichermedium nach Anspruch 5, wobei das genannte erste gehashte Passwort und der genannte erste verborgene Hash-String für jede Komponente (16) einmalig sind.

8. Computerlesbares Speichermedium nach Anspruch 5, das ferner an einem Systemanbieter Folgendes beinhaltet:
Erzeugen eines zweiten gehashten Passworts anhand der genannten ersten Codierbibliothek, wobei das genannte zweite gehashte Passwort mit dem genannten ersten gehashten Passwort (24) übereinstimmt; und
Erzeugen eines zweiten verborgenen Hash-Strings anhand der genannten ersten Codierbibliothek, wobei der genannte zweite verborgene Hash-String mit dem genannten ersten verborgenen Hash-String (24) übereinstimmt.

9. Computerlesbares Speichermedium nach Anspruch 8, das ferner Folgendes beinhaltet:
Entsperren, anhand des genannten zweiten gehashten Passworts, des genannten geschützten Teils des genannten Speichers (26); und
Lesen des genannten ersten verborgenen Hash-Strings aus dem genannten geschützten Teil des genannten Speichers (26) .

10. Computersystem (100) mit einem Computer, wobei der genannte Computer Folgendes umfasst:
einen Speicher (112);
einen Prozessor (113);
eine Kommunikationsschnittstelle (115); und
einen Verbindungsmechanismus (111), der den genannten Speicher, den genannten Prozessor und die genannte Kommunikationsschnittstelle koppelt; und
wobei der genannte Speicher mit einer Anwendung (140-1) codiert ist, die zweistufige Authentisierung und Aktivierung von QSFP+ (Quad Small Form Factor Pluggable) Transceivern (1) bereitstellt, die bei Durchführung auf dem genannten Prozessor einen Prozess (140-2) zum Verarbeiten von Informationen bereitstellt, wobei der genannte Prozess bewirkt, dass das genannte Computersystem die folgenden Vorgänge durchführt:
Erzeugen eines ersten gehashten Passworts und eines ersten verborgenen Hash-Strings, die zum Validieren einer Komponente benutzt werden, wobei die genannte Komponente einen Speicher hat, der einen geschützten Teil und einen ungeschützten Teil (12, 14) umfasst, wobei das genannte erste gehashte Passwort und der genannte erste verborgene Hash-String jeweils durch Software erzeugt werden, die eine erste Codierbibliothek umfasst, anhand von unterschiedlichen Feldern von lesbaren Daten aus dem genannten ungeschützten Teil des genannten Speichers;
Entsperren, anhand des genannten ersten gehashten Passworts, des genannten geschützten Teils des genannten Speichers (18);
Schreiben des genannten ersten gehashten Passworts in den genannten geschützten Teil des genannten Speichers (18); und
Schreiben des genannten ersten verborgenen Hash-Strings in den genannten geschützten Teil des genannten Speichers (18).

11. Computersystem nach Anspruch 10, wobei der genannte Prozess bewirkt, dass das genannte Computersystem den weiteren Vorgang des Validierens der genannten Komponente durchführt, wobei das genannte Validieren Folgendes beinhaltet:
Entsperren, mit dem genannten ersten gehashten Passwort, des genannten geschützten Teils des genannten Speichers (20);
Lesen eines Abschnitts des genannten geschützten Teils des genannten Speichers (20); und
Vergleichen des genannten Abschnitts aus dem genannten geschützten Teil des genannten Speichers mit dem genannten ersten verborgenen Hash-String, erzeugt mit der genannten, die genannte erste Codierbibliothek (22) umfassenden Software.

12. Computersystem nach Anspruch 10, das ferner einen zweiten Computer an einem Systemanbieter umfasst, wobei der genannte zweite Computer Folgendes umfasst:
einen zweiten Speicher;
einen zweiten Prozessor;
eine zweite Kommunikationsschnittstelle; und
einen zweiten Verbindungsmechanismus, der den genannten zweiten Speicher, Prozessor und die Kommunikationsschnittstelle koppelt; und
wobei der genannte Speicher mit einer Anwendung codiert ist, die zweistufige Authentisierung und Aktivierung von QSFP+-(Quad Small Form Factor Pluggable)-Transceivern bereitstellt, die bei Durchführung auf dem genannten Prozessor einen zweiten Prozess zum Verarbeiten von Informationen bereitstellt, wobei der genannte zweite Prozess bewirkt, dass das genannte zweite Computersystem die folgenden Vorgänge durchführt:
Erzeugen eines zweiten gehashten Passworts anhand der genannten ersten Codierbibliothek (24), wobei das genannte zweite gehashte Passwort mit dem genannten ersten gehashten Passwort übereinstimmt; und
Erzeugen eines zweiten verborgenen Hash-Strings anhand der genannten ersten Codierbibliothek (24), wobei der genannte zweite verborgene Hash-String mit dem genannten ersten verborgenen Hash-String übereinstimmt.

13. Computersystem nach Anspruch 12, wobei der genannte zweite Prozess bewirkt, dass das genannte zweite Computersystem die folgenden weiteren Operationen durchführt:
Entsperren, anhand des genannten zweiten gehashten Passworts, des genannten geschützten Teils des genannten Speichers (26); und
Lesen des genannten ersten verborgenen Hash-Strings aus dem genannten geschützten Teil des genannten Speichers (26) .

14. Computersystem nach Anspruch 13, wobei der genannte zweite Prozess bewirkt, dass das genannte zweite Computersystem die folgenden weiteren Vorgänge durchführt:
Vergleichen des genannten ersten verborgenen Hash-Strings mit dem genannten zweiten verborgenen Hash-String, und Validieren, wenn der genannte geschützte Abschnitt des genannten Speichers entsperrt wird und wenn der genannte erste verborgene Hash-String mit dem genannten zweiten verborgenen Hash-String übereinstimmt, der genannten Komponente (28); und
Vergleichen einer Seriennummer der genannten validierten Komponente mit Seriennummern von einer oder mehreren zusätzlichen Komponenten in dem genannten Computersystem, und wenn die genannte Seriennummer der genannten validierten Komponente mit einer Seriennummer von einer der genannten ein oder mehreren zusätzlichen Komponenten in dem Computersystem übereinstimmt, Nichtbenutzen der genannten Komponente (30).

## Revendications

1. Un procédé automatisé mis en oeuvre par ordinateur permettant de fournir une authentification en deux étapes et activation d'émetteurs-récepteurs enfichables à chaud, avec empreinte SFP (Small Form Factor Pluggable), consistant à:
générer, par un premier processeur, un premier mot de passe haché et une première chaîne de hachage cachée qui sont utilisés pour valider un composant, ledit composant ayant une mémoire comprenant une partie protégée et une partie non protégée (12, 14), dans lequel ledit premier mot de passe haché et ladite première chaîne de hachage cachée sont chacun(e) généré(e) par un logiciel comprenant une première librairie de codage utilisant différents champs de données lisibles provenant de ladite partie non protégée de ladite mémoire;
déverrouiller, par ledit premier processeur, en utilisant ledit premier mot de passe haché, ladite partie protégée de ladite mémoire (18);
écrire, par ledit premier processeur, ledit premier mot de passe haché dans ladite partie protégée de ladite mémoire (18); et
écrire, par ledit premier processeur, ladite première chaîne de hachage cachée dans ladite partie protégée de ladite mémoire (18).

2. Le procédé selon la revendication 1, consistant en outre à valider, par ledit premier processeur, ledit composant, ladite validation consistant à:
déverrouiller, en utilisant ledit premier mot de passe haché, ladite partie protégée de ladite mémoire (20);
lire une portion de ladite partie protégée de ladite mémoire (20); et
comparer ladite portion provenant de ladite partie protégée de ladite mémoire avec ladite première chaîne de hachage cachée générée en utilisant ledit logiciel comprenant ladite première librairie de codage (22).

3. Le procédé selon la revendication 1, dans lequel ledit premier mot de passe haché et ladite première chaîne de hachage cachée sont uniques pour chaque composant (16).

4. Le procédé selon la revendication 1, consistant en outre, au niveau d'un fournisseur de système, à:
générer, par un deuxième processeur, un deuxième mot de passe haché en utilisant ladite première librairie de codage (24), ledit deuxième mot de passe haché correspondant audit premier mot de passe haché; et
générer, par ledit deuxième processeur, une deuxième chaîne de hachage cachée en utilisant ladite première librairie de codage (24), ladite deuxième chaîne de hachage cachée correspondant à ladite première chaîne de hachage cachée.

5. Un support de stockage lisible par ordinateur non transitoire ayant un code lisible par ordinateur sur celui-ci pour une authentification en deux étapes et activation d'émetteurs-récepteurs enfichables à chaud, avec empreinte SFP (Small Form Factor Pluggable), ledit support incluant des instructions dans lequel un système d'ordinateur exécute des opérations consistant à:
générer un premier mot de passe haché et une première chaîne de hachage cachée qui sont utilisés pour valider un composant, ledit composant ayant une mémoire comprenant une partie protégée et une partie non protégée (12, 14), dans lequel ledit premier mot de passe haché et ladite première chaîne de hachage cachée sont chacun(e) générés par un logiciel comprenant une première librairie de codage utilisant différents champs de données lisibles provenant de ladite partie non protégée de ladite mémoire;
déverrouiller, en utilisant ledit premier mot de passe haché, ladite partie protégée de ladite mémoire (18);
écrire ledit premier mot de passe haché dans ladite partie protégée de ladite mémoire (18); et
écrire ladite première chaîne de hachage cachée dans ladite partie protégée de ladite mémoire (18).

6. Le support de stockage lisible par ordinateur selon la revendication 5, comprenant en outre des instructions dans lequel ledit système d'ordinateur exécute des opérations consistant en outre à valider ledit composant, ladite validation consistant à:
déverrouiller, en utilisant ledit premier mot de passe haché, ladite partie protégée de ladite mémoire (20);
lire une portion de ladite partie protégée de ladite mémoire (20); et
comparer ladite portion provenant de ladite partie protégée de ladite mémoire avec ladite première chaîne de hachage cachée générée en utilisant ledit logiciel comprenant ladite première librairie de codage (22).

7. Le support de stockage lisible par ordinateur selon la revendication 5, dans lequel ledit premier mot de passe haché et ladite première chaîne de hachage cachée sont uniques pour chaque composant (16).

8. Le support de stockage lisible par ordinateur selon la revendication 5, consistant en outre, au niveau d'un fournisseur de système, à:
générer un deuxième mot de passe haché en utilisant ladite première librairie de codage, ledit deuxième mot de passe haché correspondant audit premier mot de passe haché (24); et
générer une deuxième chaîne de hachage cachée en utilisant ladite première librairie de codage, ladite deuxième chaîne de hachage cachée correspondant à ladite première chaîne de hachage cachée (24).

9. Le support de stockage lisible par ordinateur selon la revendication 8, consistant en outre à:
déverrouiller, en utilisant ledit deuxième mot de passe haché, ladite partie protégée de ladite mémoire (26); et
lire ladite première chaîne de hachage cachée provenant de ladite partie protégée de ladite mémoire (26).

10. Un système d'ordinateur (100) incluant un ordinateur, ledit ordinateur comprenant:
une mémoire (112);
un processeur (113);
une interface de communications (115); et
un mécanisme d'interconnexion (111) couplant ladite deuxième mémoire, ledit processeur et ladite interface de communications; et
dans lequel ladite mémoire est codée avec une application (140-1) fournissant une authentification en deux étapes et activation d'émetteurs-récepteurs enfichables à chaud, avec empreinte SFP (Small Form Factor Pluggable) (1), qui lors de l'exécution sur ledit processeur, fournit un processus (140-2) pour traiter des informations, ledit processus faisant exécuter par ledit système d'ordinateur les opérations consistant à:
générer un premier mot de passe haché et une première chaîne de hachage cachée qui sont utilisées pour valider un composant, ledit composant ayant une mémoire comprenant une partie protégée et une partie non protégée (12, 14), dans lequel ledit premier mot de passe haché et ladite première chaîne de hachage cachée sont chacun(e) générés par un logiciel comprenant une première librairie de codage en utilisant différents champs de données lisibles provenant de ladite partie non protégée de ladite mémoire;
déverrouiller, en utilisant ledit premier mot de passe haché, ladite partie protégée de ladite mémoire (18);
écrire ledit premier mot de passe haché dans ladite partie protégée de ladite mémoire (18); et
écrire ladite première chaîne de hachage cachée dans ladite partie protégée de ladite mémoire (18).

11. Le système d'ordinateur selon la revendication 10, dans lequel ledit processus fait exécuter par ledit système d'ordinateur l'opération de validation suivante dudit composant, ladite validation consistant à:
déverrouiller, en utilisant ledit premier mot de passe haché, ladite partie protégée de ladite mémoire (20);
lire une portion de ladite partie protégée de ladite mémoire (20); et
comparer ladite portion provenant de ladite partie protégée de ladite mémoire avec ladite première chaîne de hachage cachée générée en utilisant ledit logiciel comprenant ladite première librairie de codage (22).

12. Le système d'ordinateur selon la revendication 10, comprenant en outre un deuxième ordinateur au niveau d'un fournisseur de système, ledit deuxième ordinateur comprenant:
une deuxième mémoire;
un deuxième processeur;
une deuxième interface de communications; et
un deuxième mécanisme d'interconnexion couplant ladite deuxième mémoire, ledit processeur et ladite interface de communications; et
dans lequel ladite mémoire est codée avec une application fournissant une authentification en deux étapes et activation d'émetteurs-récepteurs enfichables à chaud, avec empreinte SFP (Small Form Factor Pluggable), qui lors de l'exécution sur ledit processeur, fournit un deuxième processus pour traiter des informations, ledit deuxième processus faisant exécuter par ledit deuxième système d'ordinateur les opérations consistant à:
générer un deuxième mot de passe haché en utilisant ladite première librairie de codage (24), ledit deuxième mot de passe haché correspondant audit premier mot de passe haché; et
générer une deuxième chaîne de hachage cachée en utilisant ladite première librairie de codage (24), ladite deuxième chaîne de hachage cachée correspondant à ladite première chaîne de hachage cachée.

13. Le système d'ordinateur selon la revendication 12, dans lequel ledit deuxième processus fait exécuter par ledit deuxième système d'ordinateur les opérations supplémentaires consistant à:
déverrouiller, en utilisant ledit deuxième mot de passe haché, ladite partie protégée de ladite mémoire (26); et
lire ladite première chaîne de hachage cachée provenant de ladite partie protégée de ladite mémoire (26).

14. Le système d'ordinateur selon la revendication 13, dans lequel ledit deuxième processus fait exécuter par ledit deuxième système d'ordinateur les opérations supplémentaires consistant à:
comparer ladite première chaîne de hachage cachée avec ladite deuxième chaîne de hachage cachée, et quand ladite portion protégée de ladite mémoire est déverrouillée et quand ladite première chaîne de hachage cachée correspond à ladite deuxième chaîne de hachage cachée, puis valider ledit composant (28); et
comparer un numéro de série dudit composant qui a été validé avec des numéros de série d'un ou plusieurs composant(s) additionnel(s) dans ledit système d'ordinateur, et quand ledit numéro de série dudit composant qui a été validé correspond à un numéro de série soit dudit, soit desdits composant(s) additionnel(s) dans ledit système d'ordinateur, puis pas ne pas utiliser ledit composant (30).
